# EUROPÄISCHE PATENTSCHRIFT

(11) **EP 1 073 938 B1**
(45) Veröffentlichungstag und Bekanntmachung des Hinweises auf die Patenterteilung: **23.10.2002**
(21) Anmeldenummer: 99914536.0
(22) Anmeldetag: 24.03.1999
(51) Int. Cl.: G05B 19/4061

(54) **VERFAHREN UND ANORDNUNG ZUR AUSWAHL VON ZU ÜBERWACHENDEN SICHERHEITSPARAMETERN**
METHOD AND ARRANGEMENT FOR SELECTING SAFETY PARAMETERS TO BE MONITORED
PROCEDE ET DISPOSITIF POUR SELECTIONNER DES PARAMETRES DE SECURITE A CONTROLER

(30) Priorität: 23.04.1998 DE 19818181
(43) Veröffentlichungstag der Anmeldung: 07.02.2001
(73) Patentinhaber: Dr. Johannes Heidenhain GmbH, 83292 Traunreut (DE)
(72) Erfinder: MÜHLBAUER, Gerhard, D-83395 Freilassing (DE)
(86) Internationale Anmeldenummer: EP9902007
(87) Internationale Veröffentlichungsnummer: WO99056187

(56) Entgegenhaltungen:
- EP-A- 0 311 062
- EP-B- 0 436 818
- EP-B- 0 584 292
- DE-A- 4 341 082
- US-A- 5 353 238

## Beschreibung

Die Erfindung betrifft ein Verfahren zur Auswahl von zu überwachenden Sicherheitsparametern in Abhängigkeit von der Konfiguration einer Werkzeugmaschine oder eines Roboters und eine Anordnung zur Durchführung des Verfahrens.

Es ist bekannt, daß bei Werkzeugmaschinen aus Sicherheitsgründen der Arbeitsraum durch Schutztüren von der Umgebung abgetrennt wird. Dadurch wird verhindert, daß der Maschinenbediener bei einem gefährlichen Betriebszustand (Werkzeugbruch, unerlaubtes Verfahren des Werkzeugs oder des Werkstücks, oder ähnliches) verletzt wird. Damit diese Schutzmaßnahme nicht umgangen werden kann, werden die Schutztüren überwacht und beim Öffnen der Schutztüren werden Achsen stillgesetzt oder ihr Verfahrweg eingeschränkt. Zusätzlich werden zur Verbesserung der Betriebssicherheit die Istpositionen der Achsen einer Werkzeugmaschine überwacht. Dadurch wird ein Verfahren der Achsen in einen nicht zulässigen Bereich erkannt und kann verhindert werden. Diese Überwachung und das Auslösen von sicherheitsgerichteten Maßnahmen erfolgt dabei durch ein spezielles Überwachungsprogramm, bei welchem die für jede einzelne Konfiguration zu überwachenden Detektoren festgelegt sind.

Eine derartige Überwachung weist den Nachteil auf, daß sie zu wenig flexibel ist und sich nicht an verschiedene Konfigurationen einer Werkzeugmaschine anpassen läßt. Durch die Realisierung der Überwachung in einem Programm, muß das gesamte Programm geändert werden, wenn ein Detail am Überwachungssystem, beispielsweise ein Sicherheitsparameter oder ein Detektor verändert wird. Weiterhin gestalten sich derartige Überwachungsprogramme aufgrund von immer mehr und detaillierter zu überwachenden Betriebszuständen der Werkzeugmaschine zunehmend kompliziert und sind dadurch weder wartungsfreundlich noch leicht modifizierbar.

Aus der EP-A-0 584 292 ist ein Verfahren bekannt, bei dem der Drehvorgang einer Karusselltür durch kontinuierliche Überwachung der Prozeßhardware und der Steuerelemente der Karusselltür überwacht wird. Bei einer Fehlererkennung erfolgt ein Abschalten des Gesamtsystems. Eine Möglichkeit der Konfiguration ist nicht angegeben.

In der EP-A-0 311 062 ist die Überwachung eines Sensors eines Kraftfahrzeuges beschrieben. Kraftfahrzeugtypspezifische Parameter sind für verschiedene Typen von Kraftfahrzeugen abgespeichert. Bei jedem Startvorgang aktiviert der Sensor die entsprechenden Parameter in Abhängigkeit des Kraftfahrzeuges, in das er eingebaut ist.

Aufgabe der vorliegenden Erfindung ist es, ein Verfahren zur Auswahl von zu überwachenden Sicherheitsparametern in Abhängigkeit von der Konfiguration einer Werkzeugmaschine oder eines Roboters und eine Anordnung zur Durchführung des Verfahrens anzugeben, wobei die genannten Nachteile vermieden werden. Es soll ein flexibles Konzept zur Speicherung und Auswahl von Sicherheitsparametern abhängig von der Konfiguration der Werkzeugmaschine oder des Roboters angegeben werden.

Diese Aufgabe wird durch ein Verfahren mit den in Anspruch 1 und durch eine Anordnung mit den in Anspruch 10 angegebenen Merkmalen gelöst.

Weiterbildungen und vorteilhafte Ausgestaltungen der erfindungsgemäßen Lehre zum technischen Handeln sind den jeweils abhängigen Ansprüchen zu entnehmen.

Das erfindungsgemäße Verfahren weist den Vorteil auf, daß ein Speicher vorgesehen ist, in dem für jede mögliche Konfiguration der Werkzeugmaschine die zu überwachenden Sicherheitsparameter, wie beispielsweise Türkontaktschalter der Schutztüren bzw. die Leitungen, über die die Signale der zu überwachenden Türkontaktschalter übertragen werden, und/oder die zu überwachenden Koordinaten der Schutzräume bzw. die Leitungen, über die die zu überwachenden Koordinaten übertragen werden, abgespeichert sind. Aufgrund der Daten, die die spezielle Konfiguration der Werkzeugmaschine angeben, wird ein Speicher adressiert und aus einer darin gespeicherten Tabelle werden für jede Achse die zu überwachenden Sicherheitsparameter, z.B. Türkontakte der relevanten Schutztüren und die minimalen und maximalen Istpositionen für jede Achse ausgelesen. Das erfindungsgemäße Programm zur Überwachung benutzt diese aus dem Speicher ausgelesenen Sicherheitsparameter und kann dadurch universell ausgestaltet sein, so daß es unabhängig von einer speziellen Konfiguration einer Werkzeugmaschine ist. Dadurch werden die zur Überwachung benötigten Daten für alle möglichen Konfigurationen einer Werkzeugmaschine zentral in einem Speicher abgelegt. Ein Prozessor überprüft in bestimmten Zeitabständen, ob alle vom Speicher ausgegebenen Türkontaktschalter geschlossene Schutztüren signalisieren und ob die Istpositionen der Achsen innerhalb des Schutzraums liegen. Dadurch müssen nicht immer alle Türkontaktschalter und alle Istpositionen der Achsen überwacht werden, sondern nur die, die für einen sicheren Betriebszustand der Werkzeugmaschine in der speziellen Konfiguration relevant sind. Sollte eine überwachte Schutztüre als offen erkannt werden oder eine Achsposition außerhalb des Schutzraums sein, wird eine Fehlerbehandlung ausgelöst. Bei dieser Fehlerbehandlung werden Maßnahmen ergriffen, um wieder einen sicheren Betriebszustand herzustellen, z.B. die als fehlerhaft erkannte Achse wird stillgesetzt und an den Benutzer wird eine entsprechende Meldung ausgegeben.

Die Erfindung wird im folgenden anhand der in der Zeichnung dargestellten Ausführungsformen näher erläutert. Es zeigt:
- Fig. 1:: eine einfache Realisierungsform für das erfindungsgemäße Überwachungsverfahren,
- Fig. 2:: die Realisierungsform aus Fig. 1 mit zusätzlichen Indextabellen und
- Fig. 3:: die Realisierungsform aus Fig. 1 mit nur einem physikalischen Speicher und zwei Prozessoren.

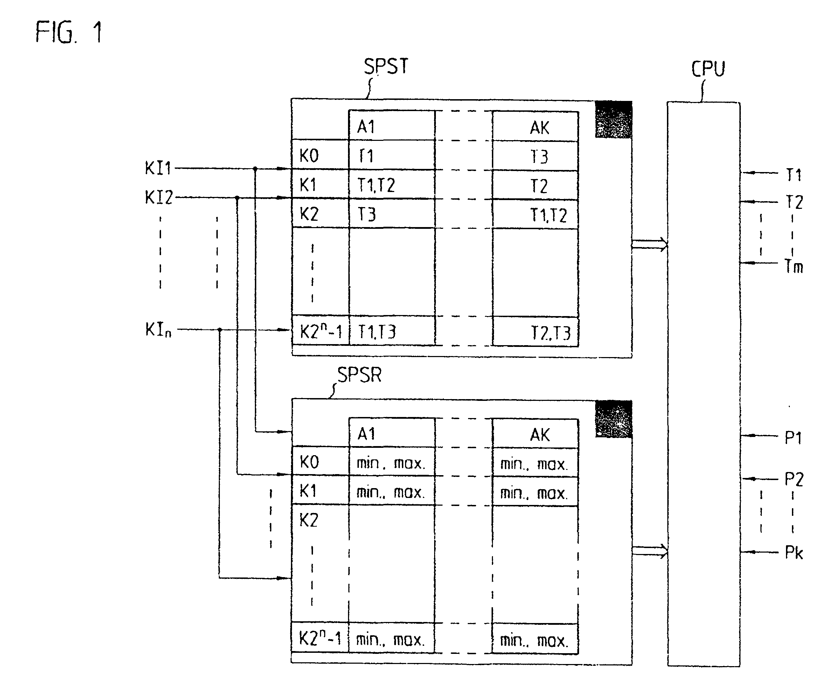

Fig. 1 zeigt die schaltungstechnische Realisierung der erfindungsgemäßen Anordnung. Über die Leitungen KI1 bis KIn werden Ausgangssignale von Detektoren für die Konfiguration der Werkzeugmaschine an den Adressbus zweier Speicher SPST und SPSR geleitet. Durch die n Leitungen KI1 bis KIn können somit 2ⁿ verschiedene Konfigurationen K0 bis K2ⁿ-1 der zu überwachenden Werkzeugmaschine signalisiert werden.

Im Speicher SPST ist eine Tabelle abgespeichert, die aufgrund der zugeleiteten Konfiguration K0 bis K2ⁿ-1 partiell ausgelesen wird. Für eine Konfiguration K0 wird die erste Zeile der Tabelle ausgelesen, für eine Konfiguration K1 die zweite Zeile usw.. In jeder Zeile der Tabelle im Speicher SPST stehen die für diese Konfiguration der Werkzeugmaschine zu überwachenden Sicherheitsparameter, beispielsweise Türkontaktschalter, geordnet nach den Achsen A1 bis Ak der Werkzeugmaschine, für die sie einen sicheren oder unsicheren Betriebszustand signalisieren. Durch die Tabelle werden jeder Achse A1 bis Ak die Türkontaktschalter zugeordnet, deren zugehörige Schutztüren für einen sicheren Betriebszustand geschlossen sein müssen. Dafür ist für jede Achse A1 bis Ak eine Spalte der Tabelle vorgesehen. Die derart aufgrund einer bestimmten Konfiguration einer Werkzeugmaschine aus dem Speicher SPST ausgelesenen Türkontaktschalter werden an einen Prozessor CPU weitergeleitet. Alternativ zu den Türkontaktschaltern selbst können die Leitungen angegeben werden, über die der auswertende Prozessor CPU die Ausgangssignale der Türkontaktschalter empfängt.

Der Prozessor liest die Ausgangssignale nur der aus dem Speicher SPST übertragenen Türkontaktschalter T1 bis Tm über die gleichnamigen Leitungen T1 bis Tm ein und vergleicht sie mit intern gespeicherten Ausgangssignalen für die Türkontaktschalter, welche einen sicheren Betriebszustand signalisieren. Da nur die aus der Tabelle ausgelesenen, relevanten Leitungen durch den Prozessor CPU überwacht werden müssen, stellt dies eine wesentliche Entlastung des Prozessors CPU dar. Wird bei diesem Vergleich Gleichheit der im Speicher SPST gespeicherten und der eingelesenen Ausgangssignale der relevanten Türkontaktschalter erkannt, liegt ein sicherer Betriebszustand der Werkzeugmaschine vor. Wird bei einem der Ausgangssignale der relevanten Türkontaktschalter eine Ungleichheit erkannt, wird ein unsicherer Betriebszustand erkannt und eine Fehlerbehandlung durchgeführt, durch die die Werkzeugmaschine in einen sicheren Betriebszustand gebracht wird. Dies ist beispielsweise dadurch möglich, daß ausgewählte oder alle Achsen A1 - Ak stillgesetzt oder in eine Rückzugsposition verfahren werden. Falls nur für ausgewählte Achsen eine Fehlerbehandlung erfolgt, werden die Achsen ausgewählt, denen in der Tabelle der Türkontaktschalter zugeordnet ist, der keinen sicheren Betriebszustand signalisiert.

Zusätzlich zur Auswahl der zu überwachenden Türkontaktschalter der Schutztüren wird die über die Leitungen KI1 bis KIn übertragene Konfiguration K0 bis K2ⁿ-1 der Werkzeugmaschine dazu benutzt, aus dem Speicher SPSR die Abmessungen des Schutzraums für jede Achse A1 bis Ak zu bestimmen, in dem sich die Istposition der Achse für einen sicheren Betriebszustand befinden muß. Dafür ist auch im Speicher SPSR eine Tabelle abgespeichert, in der für jede Konfiguration K0 bis K2ⁿ-I und für jede Achse A1 bis Ak ein maximaler und ein minimaler Positionswert gespeichert ist. Ein minimaler und maximaler Positionswert ist der Achse A1 - Ak zugeordnet, in dessen Spalte der Tabelle er steht. Sobald dem Speicher SPSR eine bestimmte Konfiguration über die Leitungen KI1 bis KIn signalisiert wird, gibt der Speicher SPSR die dieser Konfiguration zugeordnete Zeile der Tabelle an den Prozessor CPU aus. Der Prozessor CPU vergleicht, ob die über die Leitungen P1 bis Pk von den Meßsystemen übertragenen tatsächlichen Positionswerte zwischen den vom Speicher SPSR übertragenen Positionswerten liegen. Sollte dies nicht der Fall sein, wird ein unsicherer Betriebszustand erkannt und eine Fehlerbehandlung durchgeführt. Dabei wird zumindest die Achse, für die ein Überschreiten des maximalen oder ein Unterschreiten des minimalen Positionswertes erkannt wurde, stillgesetzt.

Wird beispielsweise über Leitung KI2 ein High-Pegel und über alle anderen Leitungen KI1, und KI3 bis KIn ein Low-Pegel von den Detektoren für die Konfiguration der Werkzeugmaschine übertragen, wird den beiden Speichern SPSR und SPST die Konfiguration K2 signalisiert. Die Signale auf den Leitungen KI1 bis KIn können dabei beispielsweise von Schaltern erzeugt werden, die automatisch beim Wechsel der Konfiguration der Werkzeugmaschine geschaltet werden. Durch die Konfiguration K2 wird in beiden Speichern SPST und SPSR aus der jeweils gespeicherten Tabelle eine Zeile mit den zu überwachenden Türkontaktschaltern und eine Zeile mit den zu überwachenden minimalen und maximalen Istpositionen der Achsen adressiert.

Die im Speicher SPST adressierte Zeile beinhaltet gemäß Fig. 1 die Information, daß für einen sicheren Betrieb beispielsweise von Achse A1 das über Leitung T1 übertragene Signal einen sicheren Betriebszustand signalisieren muß und für die Achse Ak das über Leitung T3 übertragene Signal. Diese Informationen über die zu überwachenden Leitungen (T1 und T3 für die Achsen A1 und Ak) für alle Achsen A1 bis Ak wird dem Prozessor CPU zugeleitet, der dann die über diese Leitungen übertragenen Signale der Türkontaktschalter mit gespeicherten Signalen vergleicht, die einen sicheren Betriebszustand signalisieren. Wird auf einer der zu überwachenden Leitungen ein Signal erkannt, das nicht mit dem gespeicherten Signal für einen sicheren Betriebszustand übereinstimmt und wird somit kein sicherer Betriebszustand signalisiert, wird eine Fehlerbehandlung durchgeführt. Dabei werden zumindest die als unsicher erkannten Achsen stillgesetzt.

Die im Speicher SPSR adressierte Zeile beinhaltet Informationen über die minimal und maximal zulässige Istposition für jede Achse A1 bis Ak der Werkzeugmaschine. Diese Positionsdaten werden ebenfalls an den Prozessor CPU weitergeleitet, der die gespeicherten Positionen mit den von den Meßsysternen der Werkzeugmaschine ermittelten Istpositionen der Achsen A1 bis Ak vergleicht. Wird dabei festgestellt, daß für eine oder mehrere Achsen ein Meßsystem eine Istposition liefert, die nicht zwischen der maximal und minimal zulässigen Position für die jeweilige Achse liegt, wird ebenfalls eine Fehlerbehandlung durchgeführt. Auch bei dieser Fehlerbehandlung wird zumindest die Achse stillgesetzt, deren Meßsystem ein Über- oder Unterschreiten der zulässigen Werte für die Istpositionen detektiert hat.

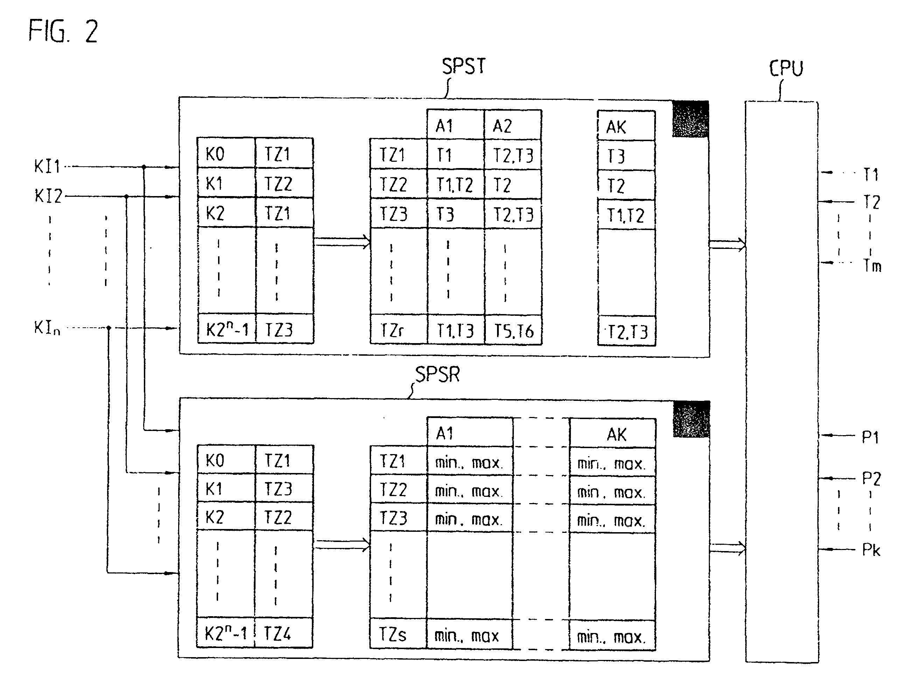

In Fig. 2 ist zusätzlich zu dem aus Fig. 1 bekannten Überwachungssystem eine Indextabelle vorgesehen. Die Indextabelle dient dazu das über die Leitungen KI1 bis KIn übertragene Signal in eine Adresse für die in den Speichern SPSR und SPST gespeicherten Tabellen mit den Sicherheitsparametern umzucodieren. Da verschiedene Konfigurationen der Werkzeugmaschine zwar theoretisch über die Leitungen KI1 bis KIn signalisiert werden können, praktisch jedoch nicht auftreten und zudem für verschiedene Konfigurationen die gleichen Leitungen durch den Prozessor CPU überwacht werden müssen, muß nicht für jede Konfiguration K0 bis K2ⁿ-1 eine Zeile mit Informationen in den Speichern SPSR und SPST gespeichert werden. Dadurch kann erheblich Speicherplatz in den Speichern SPST und SPSR eingespart werden.

Ändert der Benutzer die Konfiguration der Werkzeugmaschine, indem er beispielsweise bei einer Fräsmaschine mit Pendelbearbeitung in zwei Arbeitsräumen die Zwischentür zwischen den beiden Arbeitsräumen öffnet bzw. diese durch die numerische Steuerung der Fräsmaschine automatisch geöffnet wird, dann wird dies mittels eines Detektors für den Betriebszustand erkannt und über eine der Leitungen KI1 bis KIn an die Speicher SPST und SPSR weitergeleitet. Durch die beiden Indextabellen für die Schutztüren und die Schutzräume, die in den selben Speichern SPST und SPSR wie die zugehörigen Tabellen gespeichert sein können, wird dann das über die Leitungen KI1 bis KIn empfangene Ausgangssignal des Detektors umcodiert in eine Adresse für die Tabelle der zu überwachenden Türkontaktschalter und eine Adresse für die Tabelle mit den maximal und minimal zulässigen Istpositionen der Achsen A1 bis Ak. Die jeweilige Adresse wird in der zugehörigen Tabelle dazu benutzt die der Konfiguration zugeordnete Zeile mit den dort gespeicherten Sicherheitsparametern auszulesen. Die beiden Zeilen beinhalten Informationen zu den zu überwachenden Türkontaktschaltern und den in einem sicheren Betriebszustand maximal zulässigen Istpositionen der Achsen. Diese Informationen werden an den Prozessor CPU zur Steuerung der Überwachung übermittelt. Es werden nunmehr durch den Prozessor CPU die Ausgangssignale der neu übermittelten Türkontaktschalter T1 bis Tm, welche über die identisch bezeichneten Leitungen T1 bis Tm an den Prozessor CPU übertragen werden, und die neuen Istpositionen überwacht.

Während vor Öffnen der Zwischentür zwischen den beiden Arbeitsräumen nur der Arbeitsraum auf einen sicheren Betriebszustand überwacht werden mußte, in dem auch eine Achsbewegung erfolgt ist, müssen nach Öffnen der Zwischentür beide Arbeitsräume überwacht werden. Dadurch kann sich die Anzahl der zu überwachenden Türkontaktschalter erhöhen und der zu überwachende Schutzraum vergrößert sich.

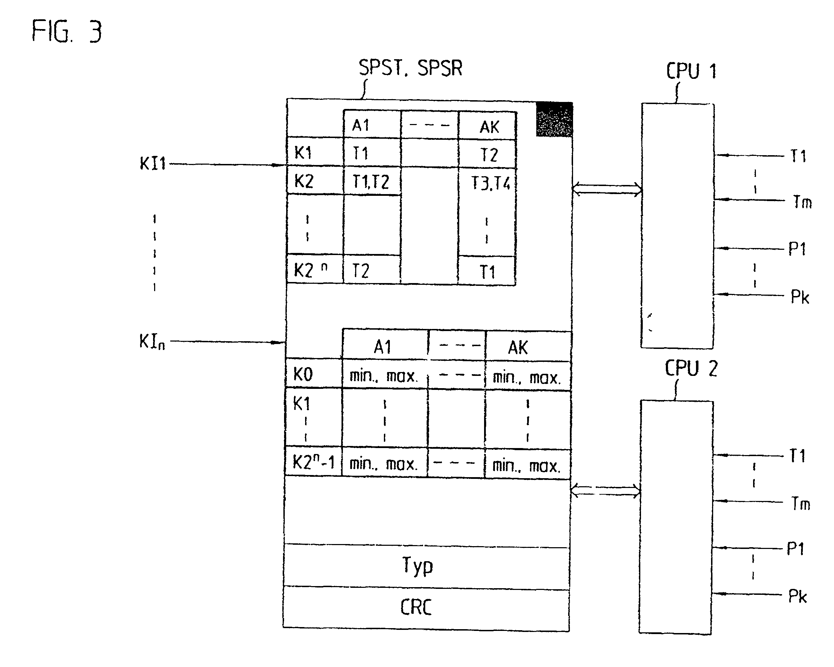

Die beiden Speicher SPST und SPSR für die Tabellen mit den Sicherheitsparametern können als ein einziger Massenspeicher ausgebildet sein, wie in Fig. 3 dargestellt, welcher die Tabelle mit den Türkontaktschaltern und die Tabelle mit den Schutzräumen für die verschiedenen Konfigurationen beinhaltet. In diesem Speicher können weiterhin die Indextabellen für den Zugriff auf die Tabellen mit den Sicherheitsparametern, eine Typkennung Typ der Werkzeugmaschine und eine Prüfsumrne CRC gespeichert sein. Vorteilhaft ist eine Realisierung dieses Massenspeichers als Optischer Speicher, Magnet- oder Halbleiterspeicher. Ein Magnetspeicher kann als Diskette, ein optischer Speicher als Compakt Disk (CD) oder Digital Versatile Disk (DVD) für eine numerische Steuerung der Werkzeugmaschine ausgestaltet sein, wenn die numerische Steuerung auch die Überwachungsfunktionen durchführt. Alternativ kann der Optische Speicher, Magnet- oder Halbleiterspeicher in Form einer auswechselbaren Karte für ein entsprechendes Lesegerät ausgebildete sein.

Da sowohl Disketten als auch Karten verwechselt werden können, ist vorteilhaft eine Kennung Typ für den Massenspeicher vorgesehen, wie in Fig. 3 dargestellt, die von mindestens einem Prozessor CPU überprüft wird. Diese Überprüfung kann vor jedem Auslesen von Sicherheitsparametern aus dem Massenspeicher in den Prozessor CPU erfolgen. Falls die Kennung des Massenspeichers nicht mit der im Prozessor CPU gespeicherten Kennung Typ übereinstimmt, wird eine Fehlermeldung an den Benutzer ausgegeben. Weitere Informationen werden dann nicht aus dem Massenspeicher ausgelesen und die Achsen der Werkzeugmaschine werden stillgesetzt. Dies ist erforderlich, weil sich die Konfiguration geändert hat, aber die neuen Sicherheitsparameter nicht zur Überwachung zur Verfügung stehen. Als Kennung Typ kann beispielsweise eine Typenkennung der Werkzeugmaschine benutzt werden.

Um zusätzliche Sicherheit gegen Änderungen der gespeicherten Sicherheitsparameter zu erreichen, beinhaltet die Tabelle mit den Sicherheitsparametern auch eine Prüfsumme CRC, die sich bei einer Änderung der Sicherheitsparameter ebenfalls ändert. Die Prüfsumme kann dabei nach dem Verfahren des Cyclic-Redundancy-Checks oder einem anderen bekannten Verfahren erzeugt werden. Unmittelbar nachdem ein neuer Speicher SPST und/oder SPSR mit der Maschine verbunden wurde oder nachdem Sicherheitsparameter aus mindestens einem der Speicher SPST oder SPSR ausgelesen wurden, wird von mindestens einem Prozessor CPU die Prüfsumme CRC neu berechnet und mit der ursprünglichen, im Speicher SPST oder SPSR gespeicherten Prüfsumme CRC verglichen. Wird dabei keine Übereinstimmung ermittelt, sind unzulässige Veränderungen der Sicherheitsparameter vorgenommen worden. In diesem Fall wird eine entsprechende Fehlerbehandlung durchgeführt, indem die Maschine stillgesetzt wird und eine Fehlermeldung bezüglich der nicht übereinstimmenden Prüfsumme ausgegeben wird.

Zusätzlich oder alternativ zu den beschriebenen Sicherheitsparametern Türkontaktschalter sowie maximale und minimale Istpositionen der Achsen A1 bis Ak können auch andere Sicherheitsparameter in den Tabellen gespeichert werden, deren Einhaltung zumindest bei jeder neuen Konfiguration der Werkzeugmaschine überprüft wird.

Für eine redundante Überwachung der in den Tabellen der Speicher SPST und SPSR gespeicherten Sicherheitsparameter werden entweder Speicher benutzt, auf die zwei Prozessoren CPU1 und CPU2 zugreifen können, wie in Fig. 3 dargestellt, oder es wird für jeden Prozessor CPU1 und CPU2 jeweils ein Speicher benutzt, wobei sichergestellt wird, daß die Speicher den gleichen Speicherinhalt aufweisen. Die abhängig von der Konfiguration der Werkzeugmaschine aus den beiden Tabellen durch die beiden Prozessoren CPU1 und CPU2 ausgelesenen oder an die beiden Prozessoren CPU1 und CPU2 übertragenen Sicherheitsparameter werden dann in beiden Prozessoren CPU1 und CPU2 unabhängig voneinander mit den über die Leitungen T1 bis Tm und P1 bis Pk an die beiden Prozessoren CPU1 und CPU2 übertragenen tatsächlichen Werten der Sicherheitsparameter verglichen. Sollte nur einer der beiden Prozessoren CPU1 oder CPU2 einen unsicheren Betriebszustand der Werkzeugmaschine erkennen, wird eine Fehlerbehandlung ausgelöst.

Auch die in den Speichern SPST und SPSR gespeicherten Kennungen Typ werden in beiden Prozessoren CPU1 und CPU2 auf Übereinstimmung mit in den Prozessoren CPU1 und CPU2 oder diesen Prozessoren zugeordneten Speichern gespeicherten Kennungen Typ überprüft. Ebenso wird die in den Speichern SPST und/oder SPSR gespeicherte Prüfsumme CRC in beiden Prozessoren CPU1 und CPU2 mit von beiden Prozessoren CPU1 und CPU2 unabhängig voneinander neu berechneten Prüfsummen CRC verglichen.

## Patentansprüche

1. Verfahren zur Auswahl von zu überwachenden Sicherheitsparametem einer Werkzeugmaschine oder eines Roboters, wobei für mögliche Konfigurationen (K0 - K2ⁿ-1) der Werkzeugmaschine oder des Roboters die zu überwachenden Sicherheitspararneter (T1 - Tn, P1 - Pk) in zumindest einem Speicher (SPST, SPSR) abgespeichert werden und die zu überwachenden Sicherheitsparameter (T1 - Tn, P1 - Pk) abhängig von der Konfiguration (K0 - K2ⁿ-1) der zu überwachenden Einrichtung zur Überwachung ausgewählt werden, indem Daten, die von Detektoren für die Konfiguration der zu überwachenden Einrichtung ausgegeben werden, entweder unmittelbar oder nach einer Umcodierung als Adresse für den zumindest einen Speicher (SPST, SPSR) der Sicherheitsparameter benutzt werden.

2. Verfahren nach Anspruch 1, **dadurch gekennzeichnet, daß** aufgrund der Daten, welche die Konfiguration (K0 - K2ⁿ-1) der zu überwachenden Einrichtung kennzeichnen, aus dem zumindest einen Speicher (SPST, SPSR) die zu überwachenden Sicherheitsparameter (T1 - Tn, P1 - Pk) ausgelesen und an mindestens einen Prozessor (CPU) weitergeleitet werden.

3. Verfahren nach Anspruch 1 oder 2, **dadurch gekennzeichnet, daß** durch mindestens einen Prozessor (CPU) bei der Überwachung ein sicheren Betriebszustands die von dem zumindest einen Speicher (SPST, SPSR) bereitgestellten Sicherheitsparameter (T1 - Tn, P1 - Pk) mit vorgegebenen Sollwerten verglichen werden.

4. Verfahren nach einem der vorhergehenden Ansprüche, **dadurch gekennzeichnet, daß** die Umcodierung der Ausgangssignale der Detektoren für die Konfiguration der zu überwachenden Einrichtung in eine Adresse (TZ1 - TZr, TZ1 - TZs) für die Sicherheitsparameter (T1 - Tn, P1 - Pk) durch eine oder mehrere in dem zumindest einen Speicher (SPST, SPSR) abgelegte Indextabellen erfolgt.

5. Verfahren nach einem der vorhergehenden Ansprüche, **dadurch gekennzeichnet, daß** vor dem Einlesen von neuen Sicherheitsparametern (T1 - Tm, P1 - Pk) durch mindestens einen Prozessor (CPU) eine Kennung (Typ) der Speicher (SPST, SPSR) überprüft wird und bei fehlerhafter Kennung (Typ) der Betrieb der Einrichtung angehalten wird.

6. Verfahren nach einem der vorhergehenden Ansprüche, **dadurch gekennzeichnet, daß** nach dem Verbinden mindestens eines neuen Speichers (SPST, SPSR) oder nach dem Einlesen von neuen Sicherheitsparametern eine Prüfsumme (CRC) durch mindestens einen Prozessor (CPU) bezüglich des Speicherinhalts des neuen oder des neu ausgelesenen Speichers neu berechnet wird, daß diese Prüfsumme (CRC) mit einer in dem Speicher gespeicherten Prüfsumme (CRC) verglichen wird und daß bei fehlender Gleichheit der neu berechneten mit der gespeicherten Prüfsumme (CRC) der Betrieb der Einrichtung angehalten wird.

7. Verfahren nach einem der vorhergehenden Ansprüche, **dadurch gekennzeichnet, daß** zwei Prozessoren (CPU1, CPU2) vorgesehen sind, die unabhängig voneinander das Verfahren durchführen, daß die in beiden Prozessoren (CPU1, CPU2) unabhängig voneinander ermittelten Ergebnisse auf Gleichheit überprüft werden und daß bei Ungleichheit der Betrieb angehalten, ansonsten weitergeführt wird.

8. Verfahren nach einem der vorhergehenden Ansprüche, **dadurch gekennzeichnet, daß** als zu überwachende Sicherheitsparameter bestimmte Türkontaktschalter für einzelne Achsen (A1 bis Ak) abgespeichert sind, wobei durch eine Tabelle jeder Achse (A1 bis Ak) die Türkontaktschalter zugeordnet werden, deren zugehörige Schutztür für einen sicheren Betriebszustand geschlossen sein müssen.

9. Verfahren nach einem der vorhergehenden Ansprüche, **dadurch gekennzeichnet, daß** als zu überwachende Sicherheitsparameter ein maximaler und minimaler Positionswert für einzelne Achsen (A1 bis Ak) abgespeichert sind, wobei durch eine Tabelle jeder Achse (A1 bis Ak) die Positionen der Achse (A1 bis Ak) für einen sicheren Betriebszustand zugeordnet werden.

10. Anordnung zur Auswahl von zu überwachenden Sicherheitsparametern einer Werkzeugmaschine oder eines Roboters, wobei mindestens ein Prozessor (CPU), welcher die Überwachung durchführt, über Leitungen (T1 - Tm, P1 - Pk) mit Detektoren für die Betriebssicherheit der zu überwachenden Einrichtung verbunden ist, und der mindestens eine Prozessor (CPU) weiterhin mit mindestens einem Speicher (SPST, SPSR) verbunden ist, in welchem die zu überwachenden Sicherheitsparameter (T1 - Tm, P1 - Pk) für mögliche Konfigurationen der Werkzeugmaschine oder des Roboters gespeichert sind, und daß der zumindest eine Speicher (SPST, SPSR) über Leitungen (KI1 - KIn) mit Detektoren für die Konfiguration der zu überwachenden Einrichtung verbunden ist, an denen eine konfigurationsspezifische Adresse zur Adressierung des Speichers (SPST, SPSR) ansteht.

11. Anordnung nach Anspruch 10, **dadurch gekennzeichnet, daß** der mindestens eine Speicher (SPST, SPSR) als auswechselbarer Speicher ausgestaltet ist.

12. Anordnung nach Anspruch 10 oder 11, **dadurch gekennzeichnet, daß** der mindestens eine Speicher (SPST, SPSR) als optischer Speicher, Magnetoder Halbleiterspeicher ausgestaltet ist.

13. Anordnung nach einem der Ansprüche 10 bis 12, **dadurch gekennzeichnet, daß** der mindestens eine Speicher (SPST, SPSR) eine Kennung beinhaltet.

14. Anordnung nach einem der Ansprüche 10 bis 13, **dadurch gekennzeichnet, daß** zwei Prozessoren (CPU1, CPU2) vorgesehen sind, die mit den Detektoren und mit den mindestens einem Speicher (SPST, SPSR) verbunden sind, wodurch zwei Prozessoren (CPU1, CPU2) unabhängig voneinander die Sicherheitseinrichtungen überwachen.

## Claims

1. Method for selecting safety parameters to be monitored of a machine tool or of a robot, the safety parameters (T1 - Tn, P1 - Pk) to be monitored for possible configurations (K0 - K2ⁿ-1) of the machine tool or of the robot being stored in at least one memory (SPST, SPSR) and the safety parameters (T1 - Tn, P1 - Pk) to be monitored being selected for monitoring dependent upon the configuration (K0 - K2ⁿ-1) of the device to be monitored, by using data either directly or after a code conversion as an address for at least one memory (SPST, SPSR) of the safety parameters, which data are output from detectors for the configuration of the device to be monitored.

2. Method according to claim 1, **characterised in that** the safety parameters (T1 - Tn, P1 - Pk) to be monitored are read out from at least one memory (SPST, SPSR) and are transmitted to at least one processor (CPU) on the basis of the data which characterise the configuration (K0 - K2ⁿ-1) of the device to be monitored.

3. Method according to claim 1 or 2, **characterised in that** the safety parameters (T1 - Tn, P1 - Pk), which are available from at least one memory (SPST, SPSR), are compared with preset reference values by means of at least one processor (CPU) during the monitoring of a safe operational state.

4. Method according to one of the preceding claims, **characterised in that** the code conversion of the output signals of the detectors for the configuration of the device to be monitored is effected in an address (TZ1 - TZr, TZ1 - TZs) for the safety parameters (T1 - Tn, P1 - Pk) by means of one or more index tables filed in at least one memory (SPST, SPSR).

5. Method according to one of the preceding claims, **characterised in that** an identifier (type) of the memories (SPST, SPSR) is checked before the reading-in of new safety parameters (T1 - Tm, P1 - Pk) by means of at least one processor (CPU), and in the case of a defective identifier (type) the operation of the device is halted.

6. Method according to one of the preceding claims, **characterised in that** a checksum (CRC) is recalculated by means of at least one processor (CPU), with regard to the memory content of the new or the recently read-out memory, after the connection of at least one new memory (SPST, SPSR) or after the reading-in of new safety parameters, **in that** this checksum (CRC) is compared with a checksum (CRC) which is stored in the memory, and **in that** in the case of a lack of sameness of the recalculated checksum with the stored checksum (CRC), the operation of the device is halted.

7. Method according to one of the preceding claims, **characterised in that** two processors (CPU1, CPU2) are provided which implement the method independently of each other, **in that** the results which are detected in both processors (CPU1, CPU2) independently of each other are checked for sameness, and **in that** in the case of non-sameness the operation is halted, or otherwise is continued.

8. Method according to one of the preceding claims, **characterised in that** specific door switches for individual axes (A1 to Ak) are stored as safety parameters to be monitored, the door switches being assigned to each axis (A1 to Ak) by means of a table, the associated protective door of said door switches being required to be closed for a safe operational state.

9. Method according to one of the preceding claims, **characterised in that** a maximum and minimum position value for individual axes (A1 to Ak) are stored as safety parameters to be monitored, the positions of the axis (A1 to Ak) for a safe operational state being assigned to each axis (A1 to Ak) by means of a table.

10. Arrangement for selecting safety parameters to be monitored of a machine tool or of a robot, at least one processor (CPU) which implements the monitoring being connected via wires (T1 - Tm, P1 - Pk) to detectors for the operational safety of the device to be monitored, and at least one processor (CPU) being connected furthermore to at least one memory (SPST, SPSR) in which the safety parameters (T1 - Tm, P1 - Pk) to be monitored for possible configurations of the machine tool or of the robot are stored, and in that at least one memory (SPST, SPSR) is connected via wires (Kl1 - Kln) to detectors for the configuration of the device to be monitored, at which detectors a configuration-specific address for addressing the memory (SPST, SPSR) is available.

11. Arrangement according to claim 10, **characterised in that** at least one memory (SPST, SPSR) is configured as an exchangeable memory.

12. Arrangement according to claim 10 or 11, **characterised in that** at least one memory (SPST, SPSR) is configured as an optical memory, magnetic- or semiconductor memory.

13. Arrangement according to one of the claims 10 to 12, **characterised in that** at least one memory (SPST, SPSR) contains an identifier.

14. Arrangement according to one of the claims 10 to 13, **characterised in that** two processors (CPU1, CPU2) are provided, which are connected to the detectors and to at least one memory (SPST, SPSR), by means of which two processors (CPU1, CPU2) monitor the safety devices independently of each other.

## Revendications

1. Procédé pour sélectionner des paramètres de sécurité à surveiller d'une machine-outil ou d'un robot, selon lequel on mémorise dans au moins une mémoire (SPST, SPSR) les paramètres de sécurité (T1-Tn, P1-Pk) à surveiller pour des configurations (K0 - K2ⁿ-1) possibles de la machine-outil ou du robot et on sélectionne les paramètres de sécurité (T1-Tn, P1-Pk) à surveiller en fonction de la configuration (K0 - K2ⁿ-1) du dispositif à surveiller en utilisant des données qui sont fournies par des détecteurs de la configuration du dispositif à surveiller, soit de manière directe, soit après un transcodage sous forme d'adresse pour la mémoire (SPST, SPSR), au nombre d'au moins une, des paramètres de sécurité.

2. Procédé selon la revendication 1, **caractérisé en ce que** sur la base des données qui caractérisent la configuration (K0 - K2n-1) du dispositif à surveiller, on extrait de la mémoire (SPST, SPSR), au nombre d'au moins une, les paramètres de sécurité (T1-Tn, P1-Pk) à surveiller et on les transmet à au moins un processeur (CPU).

3. Procédé selon la revendication 1 ou 2, **caractérisé en ce qu'**à l'aide d'au moins un processeur (CPU), pour la surveillance d'un état de fonctionnement sûr, on compare les paramètres de sécurité (T1-Tn, P1-Pk) fournis par la mémoire (SPST, SPSR), au nombre d'au moins une, avec des valeurs de consigne prédéterminées.

4. Procédé selon une des revendications précédentes, **caractérisé en ce que** le transcodage des signaux des détecteurs pour la configuration du dispositif à surveiller en une adresse (TZ1-TZr, TZ1-TZs) pour les paramètres de sécurité (T1-Tn, P1-Pk) est réalisé à l'aide d'une ou de plusieurs tables d'index mémorisées dans la mémoire (SPST, SPSR), au nombre d'au moins une.

5. Procédé selon une des revendications précédentes, **caractérisé en ce qu'**avant l'écriture de nouveaux paramètres de sécurité (T1-Tm, P1-Pk) par au moins un microprocesseur (CPU) on vérifie un code (type) de la mémoire (SPST, SPSR) et en cas de code (Type) erroné, on arrête le fonctionnement du dispositif.

6. Procédé selon une des revendications précédentes, **caractérisé en ce qu'**après la connexion à au moins une nouvelle mémoire (SPST, SPSR) ou après l'écriture de nouveaux paramètres de sécurité on calcule à nouveau une somme de contrôle (CRC) à l'aide d'au moins un microprocesseur (CPU) se rapportant au contenu de la nouvelle mémoire ou de la mémoire nouvellement inscrite, **en ce qu'**on compare cette somme de contrôle (CRC) avec une somme de contrôle (CRC) mémorisée dans la mémoire et **en ce qu'**en cas d'absence d'identité entre la somme de contrôle nouvelle calculée et la somme de contrôle (CRC) mémorisée, on arrête le fonctionnement du dispositif.

7. Procédé selon une des revendications précédentes, **caractérisé en ce qu'**il est prévu deux processeurs (CPU1, CPU2) qui exécutent le procédé indépendamment l'un de l'autre, **en ce qu'**on contrôle de manière indépendante dans les deux processeurs (CPU1, CPU2) l'identité des résultats calculés et **en ce qu'**en cas d'absence d'identité, on arrête le fonctionnement du dispositif, sans quoi celui-ci est poursuivi.

8. Procédé selon une des revendications précédentes, **caractérisé en ce qu'**on mémorise comme paramètres de sécurité à surveiller des contacteurs de porte donnés pour les différents axes (A1 à Ak), les contacteurs de porte dont la porte correspondante doit être fermée pour garantir un fonctionnement sûr étant associés au moyen d'une table à chacun des axes (A1 à Ak).

9. Procédé selon une des revendications précédentes, **caractérisé en ce qu'**on mémorise comme paramètres de sécurité à surveiller une valeur de position maximale et une valeur de position minimale pour les différents axes (A1 à Ak), les positions des axes (A1 à Ak) pour un fonctionnement sûr étant associées à chacun des axes (A1 à Ak) au moyen d'une table.

10. Dispositif pour la sélection de paramètres de sécurité à surveiller d'une machine-outil ou d'un robot, dans lequel au moins un microprocesseur (CPU) est connecté par des lignes (T1-Tm, P1-Pk) à des détecteurs pour la sécurité de fonctionnement du dispositif à surveiller et le microprocesseur (CPU), au nombre d'au moins un, est également relié à au moins une mémoire (SPST, SPSR) dans laquelle les paramètres à surveiller (T1-Tm, P1-Pk) pour des configurations possibles de la machine-outil ou du robot sont mémorisés, et dans lequel la mémoire (SPST, SPSR), au nombre d'au moins une, est reliée par des lignes (K11, Kln) à des détecteurs pour la configuration du dispositif à surveiller auxquels est affectée une adresse spécifique à la configuration pour l'adressage de la mémoire (SPST, SPSR).

11. Dispositif selon la revendication 10, **caractérisé en ce que** la mémoire (SPST, SPSR), au nombre d'au moins une, est agencée en mémoire interchangeable.

12. Dispositif selon la revendication 10 ou 11, **caractérisé en ce que** la mémoire (SPST, SPSR), au nombre d'au moins une, est agencée en mémoire optique, en mémoire magnétique ou mémoire à semiconducteurs.

13. Dispositif selon une des revendications 10 à 12, **caractérisé en ce que** la mémoire (SPST, SPSR), au nombre d'au moins une, contient un code

14. Dispositif selon une des revendications 10 à 13, **caractérisé en ce qu'**il est prévu deux processeurs (CPU1, CPU2) qui sont reliés aux détecteurs et à la mémoire (SPST, SPSR), au nombre d'au moins une, les deux processeurs (CPU1, CPU2) surveillant indépendamment l'un de l'autre les dispositifs de sécurité.
